# FASCICULE DE BREVET EUROPEEN

(11) **EP 2 900 708 B1**
(45) Date de publication et mention de la délivrance du brevet: **04.05.2016**
(21) Numéro de dépôt: 13779289.1
(22) Date de dépôt: 23.09.2013
(51) Int. Cl.: C08F 20/06, C08F 2/38, C08L 33/02, C09C 3/04, C09C 3/10

(54) **PROCÉDÉ DE POLYMERISATION DE L'ACIDE (METH)ACRYLIQUE EN SOLUTION, SOLUTIONS DE POLYMERES OBTENUES ET LEURS UTILISATIONS**
VERFAHREN ZUR POLYMERISATION VON (METH)ACRYLSÄURE IN EINER LÖSUNG, DARAUS GEWONNENE POLYMERLÖSUNGEN UND VERWENDUNGEN DAVON
METHOD FOR POLYMERISING (METH)ACRYLIC ACID IN SOLUTION, POLYMER SOLUTIONS OBTAINED AND USES THEREOF

(30) Priorité: 26.09.2012 FR 1259043
(43) Date de publication de la demande: 05.08.2015
(73) Titulaire: COATEX, 69730 Genay (FR)
(72) Inventeur: SUAU, Jean-Marc, F-69480 Lucenay (FR); JACQUEMET, Christian, F-69005 France (FR); MONGOIN, Jacques, F-69650 Quincieux (FR)
(74) Mandataire: Fiorucci, Hélène
(86) Numéro de dépôt international: PCT/FR2013/052209
(87) Numéro de publication internationale: WO 2014/049252

(56) Documents cités:
- WO-A1-2005/095466
- WO-A1-2006/024706

## Description

La présente invention concerne le domaine technique de la polymérisation radicalaire de l'acide (méth)acrylique. Plus précisément, la présente invention concerne un nouveau procédé de polymérisation radicalaire, les polymères ainsi obtenus et leurs applications dans l'industrie.

Les procédés de polymérisation radicalaire nécessitent classiquement la mise en contact dans au moins un solvant de monomères à polymériser, d'un agent de transfert de chaîne, d'une source de radicaux libres et éventuellement d'un catalyseur.

L'objectif principal lorsqu'il s'agit d'un procédé de polymérisation est l'obtention d'un polymère qui présente une masse moléculaire adaptée à l'application que l'on souhaite en faire. La présente invention vise l'obtention de polymères de masse moléculaire inférieure à 8 000 g/mol, par exemple de l'ordre de 6 000 g/mol.

Il existe différents procédés de polymérisation radicalaire.

On peut d'abord citer les méthodes qui mettent en oeuvre des solvants organiques tels que des alcools secondaires comme l'isopropanol. Ces méthodes ne sont aujourd'hui pas satisfaisantes car elles génèrent des composés organiques volatils (COV ou en anglais VOC). D'une part, il est nécessaire d'éliminer ces solvants en fin de réaction, ce qui a pour effet de complexifier le procédé industriel de préparation du polymère. D'autre part, les effets sur la santé et sur l'environnement de ces solvants sont reconnus comme très néfastes, de sorte qu'on recherche à éviter d'en produire. Enfin, même après purification (distillation), il reste toujours des traces de solvant dans la solution de polymères.

Il existe d'autres méthodes de synthèse de polymères polyacryliques qui ont lieu dans l'eau et ne génèrent pas de composés organiques volatils.

Dans ces procédés, on peut utiliser de l'eau oxygénée qui joue le rôle d'initiateur, ainsi que, par exemple, du sulfate de cuivre qui joue le rôle de catalyseur et d'agent de transfert de chaîne. Néanmoins, pour aboutir à un polymère qui présente une masse moléculaire inférieure à 8 000 g/mol, par exemple de l'ordre de 6 000 g/mol, il est nécessaire d'engager des quantités importantes de catalyseur, ce qui génère des quantités importantes de sous-produits polluants.

Alternativement, on utilise l'acide thiolactique, ou un autre mercaptan RSH, en tant qu'agent de transfert de chaîne supplémentaire, mais, à nouveau, pour obtenir un polymère qui présente une masse moléculaire inférieure à 8 000 g/mol, par exemple de l'ordre de 6 000 g/mol, il faut engager des quantités importantes d'acide thiolactique ou, de manière plus générale, d'agent de transfert.

D'autres procédés encore ont recours à l'hypophosphite de sodium, de formule chimique NaPO₂H₂, en tant qu'agent de transfert de chaîne et d'oxydo-réduction, en présence d'eau oxygénée ou de générateur de radicaux. Cela présente l'inconvénient majeur de nécessiter des quantités importantes d'hypophosphite de sodium, une fraction du phosphore se retrouvant greffée dans le polymère, une autre fraction du phosphore se retrouvant sous forme de sels de phosphate dans les eaux de procédé. Ceci constitue, d'une part, un inconvénient lors de l'utilisation du polymère et, d'autre part, un polluant pour l'environnement.

Parmi les différents procédés de polymérisation radicalaire, on peut également citer la polymérisation radicalaire contrôlée de type RAFT (Reversible Addition Fragmentation chain Transfer) qui permet de réaliser la polymérisation vivante d'un monomère. Le principe de la polymérisation vivante par voie RAFT est décrit dans le document WO 98/01478. L'agent de transfert de chaîne ainsi que le monomère à polymériser sont initialement chargés dans un réacteur, ainsi que le générateur de radicaux, afin que le procédé induise un échange de fonctionnalité sur les chaînes en croissance (Macromolecules ; 10 juillet 2012, vol 15, n°13, p 5321-5342). On ajoute ensuite la source de radicaux libres, on chauffe et on poursuit la réaction jusqu'à obtenir un polymère qui présente la masse moléculaire attendue. Il est, en effet, possible avec un tel procédé de contrôler précisément les conditions réactionnelles afin d'obtenir un polymère de masse moléculaire souhaitée. Un tel procédé permet en outre d'obtenir des polymères présentant de faibles indices de polydispersibilité IP (également appelé indice de polymolécularité), ce qui les rend particulièrement efficaces pour certaines applications. Néanmoins, les taux de conversion de l'acide acrylique décrits dans ce document sont très faibles.

Les documents WO 02/070571 et WO 2005/095466 décrivent quant à eux un procédé de polymérisation radicalaire contrôlée de l'acide acrylique au moyen d'agents de transfert de chaîne soufrés, qui permet d'obtenir un excellent taux de conversion des monomères.

Le document WO 2006/024706 décrit des polymères d'acides acryliques obtenus par procédé de type RAFT et les diverses utilisations de ces polymères.

Plus précisément, le document WO 02/070571 décrit notamment des composés trithiocarbonates de type (I) dont le dibenzyl trithiocarbonate (II). Les documents WO 2005/095466 et WO 2006/024706 quant à eux décrivent des trithiocarbonates très particuliers solubles dans l'eau de type (III). Les formules de ces composés sont données ci-dessous. 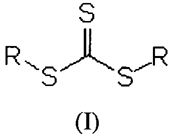 selon laquelle R représente une chaîne alkyle, aryle, qui peut être substituée ou non.

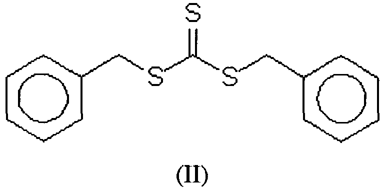

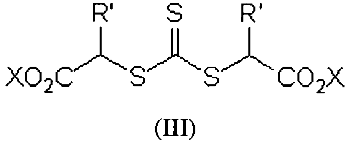

Selon un mode de réalisation préférentielle décrit dans les documents WO 2005/095466 et WO 2006/024706 les groupements X et R' sont tels que :
- X représente Na ou H et
- R' représente une chaîne alkyle comportant de 2 à 4 atomes de carbone.

Pour mettre en oeuvre une polymérisation radicalaire contrôlée de type RAFT, et ainsi obtenir un polymère de masse moléculaire attendue présentant un bon indice IP, il est important d'introduire dans le milieu réactionnel une quantité disponible d'agent de transfert de chaîne, autrement dit d'engager une quantité d'agent de transfert de chaîne telle que chaque chaîne à polymériser soit fonctionnalisée par un agent de transfert de chaîne. En outre, il est important que cet agent de transfert de chaîne soit d'ores et déjà disponible lorsque la polymérisation est initiée, c'est-à-dire lorsque l'on chauffe le réacteur de polymérisation et que l'on génère des radicaux. Ceci implique que des quantités importantes d'agent de transfert de chaîne doivent être mises en oeuvre dans un procédé de polymérisation radicalaire contrôlée de type RAFT.

Malgré tous les avantages résultant d'une polymérisation RAFT, l'utilisation de telles quantités d'agent de transfert de chaîne présentent un certain nombre d'inconvénients.

Tout d'abord, il s'avère que les agents de transfert de chaîne sont des produits couteux, ce qui a une incidence non négligeable sur le coût du polymère obtenu.

De plus, lorsqu'on utilise des agents de transfert de chaîne soufrés tel que décrits dans les documents WO 02/070571, WO 2005/095466 et WO 2006/024706, on constate que le polymère qui est issu d'un tel procédé de polymérisation radicalaire contrôlée de type RAFT porte sur son squelette l'agent de transfert de chaîne ou des résidus de celui-ci. Ceci peut notamment être mis en évidence par des analyses RMN. Il est donc nécessaire d'hydrolyser, par exemple avec de la soude NaOH, le produit issu du procédé, ce qui constitue une étape supplémentaire dans le procédé. En outre, on constate qu'une fraction de ces composés va être dégradée en sous-produits soufrés libres du type CS₂ et H₂S, et se retrouver dans la solution aqueuse de polymère finale et dans les eaux d'écoulement du procédé, pouvant ainsi avoir un impact négatif sur l'être humain et sur l'environnement. En outre, la présence de ces sous-produits soufrés dans la solution aqueuse génère lors de l'utilisation du polymère des dégagements gazeux nocifs pour l'être humain. Ceci est particulièrement vrai quand le polymère est utilisé comme agent dispersant ou d'aide au broyage de matière minérale, par exemple lors du broyage du carbonate de calcium CaCO₃.

Le sulfure de carbone, de formule chimique CS₂, est un produit particulièrement toxique qui est susceptible de nuire à la fertilité. Le sulfure d'hydrogène, de formule chimique H₂S, est un gaz acide malodorant, très nocif pour les organismes aquatiques et qui peut s'avérer mortel par inhalation. Il est à noter en outre que les mercaptans présentent les mêmes inconvénients que le sulfure d'hydrogène. Les autorités réglementaires demandent une classification précise de tels sous-produits dans les solutions de polymères susceptibles d'en contenir, y compris à des seuils de concentration relativement faible.

Un objet de la présente invention est de proposer un procédé qui permette d'obtenir une solution aqueuse de polymères qui contienne moins de sous-produits du type sulfure de carbone ou sulfure d'hydrogène, de manière à réduire les risques sur l'être humain et sur l'environnement lors de la synthèse du polymère, mais également lors de l'utilisation de la solution polymérique notamment pour le broyage des matières minérales.

Un autre objet de la présente invention est de proposer un procédé de préparation d'un polymère.

Un autre objet de la présente invention est de proposer un procédé de préparation d'un polymère de l'acide (méth)acrylique présentant une masse moléculaire inférieure à 8 000 g/mol, par exemple inférieure à 7 000 g/mol.

Un autre objet de la présente invention est de proposer un procédé de préparation d'un polymère polyacrylique sans solvant, c'est-à-dire qui ne génère pas de composés organiques volatils.

Un autre objet encore de la présente invention est de proposer un procédé de fabrication d'un polymère présentant un bon indice IP tout en maîtrisant les coûts associés au procédé.

Un autre objet de la présente invention est de proposer un procédé de fabrication d'un polymère qui ne comporte pas sur son squelette d'atomes de soufre ou de phosphore issus des réactifs de polymérisation et qui soit malgré tout de bas poids moléculaire.

Un autre objet encore de la présente invention est de réduire la quantité de polluants dans les eaux du procédé, liés à l'utilisation de réactifs comportant du soufre et du phosphore.

Les inventeurs ont découverts de manière surprenante un procédé de préparation sans solvant d'un polymère de l'acide (méth)acrylique en solution, ledit polymère présentant une masse moléculaire inférieure à 8 000 g/mol et un indice de polydispersibilité IP compris entre 2 et 3, comprenant les étapes suivantes :
a) on introduit de l'eau dans un réacteur de synthèse, et éventuellement un catalyseur à base de sels métalliques hydrosolubles,
b) on chauffe le réacteur à une température d'au moins 60°C,
c) on introduit dans le réacteur, de manière continue et simultanée, les composés suivants :
   b1) le ou les monomère(s) (méth)acrylique(s) à polymériser
   b2) au moins un composé de formule (I) : 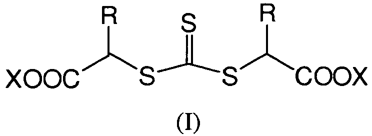 selon laquelle :
      - X représente Na, K ou H, et
      - R représente une chaîne alkyle comportant de 1 à 5 atomes de carbone
   b3) un système initiateur de polymérisation,
   le pourcentage massique (poids/poids) entre ledit composé de formule (I) et ledit(lesdits) monomères (méth)acrylique(s) étant compris entre 0,1 et 2,5 %.

Le procédé de la présente invention permet en effet d'obtenir des polymères qui présentent une masse moléculaire inférieure à 8 000 g/mol, par exemple inférieure à 7 000 g/mol, par exemple de l'ordre de 6 000 g/mol.

Selon un mode de réalisation de la présente invention, les polymères présentent une masse moléculaire supérieure à 500 g/mol, par exemple supérieure à 1 000 g/mol.

La solution aqueuse de polymères ainsi obtenue est caractérisée en ce que, sans qu'il soit nécessaire de procéder à un traitement, par exemple une neutralisation de celle-ci, on obtient un degré de pureté polymérique tel que le pourcentage molaire (mol/mol) entre les polymères soufrés de l'acide (méth)acrylique et les polymères de l'acide (méth)acrylique totaux est inférieur à 0,1 %, tel que mesuré par RMN et spectroscopie de diffusion ou méthode DOSY.

DOSY (Diffusion Ordered SpectroscopY) est une technique de RMN à deux dimensions qui permet de déterminer la structure de composés organiques en mélange sans séparation physique préalable. Les molécules sont discriminées en fonction de leur coefficient d'autodiffusion D, c'est-à-dire en fonction de leur rayon hydrodynamique. Il en résulte une carte 2D sur laquelle figurent des taches qui corrèlent chaque signal RMN à un coefficient D, ce qui permet d'isoler le spectre RMN de chacun des composés du mélange.

Par « polymères soufrés de l'acide (méth)acrylique », on entend des polymères comportant une structure trithiocarbonate centrale par exemple de formules suivantes : 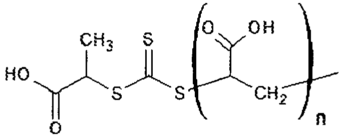 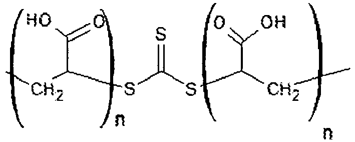 ou des polymères comportant des bouts de chaîne thiol, par exemple de formules suivantes :

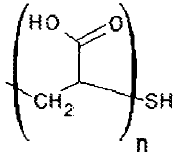

Ainsi, le procédé de la présente invention qui n'est pas un procédé de polymérisation radicalaire de type RAFT (étant donné, d'une part, la quantité de composés de formule (I) utilisée et, d'autre part, de l'ordre d'introduction des réactifs dans le réacteur de synthèse) permet d'obtenir une solution aqueuse de polymères qui, avantageusement, d'une part, comporte moins de polymères soufrés de l'acide (méth)acrylique qu'une solution de polymères obtenue suite à un procédé de polymérisation radicalaire de type RAFT ; d'autre part, la solution obtenue par le procédé comportant elle-même moins de sous-produits de réactions de type H₂S ou CS₂ que la solution de polymères obtenue suite à un procédé de polymérisation radicalaire de type RAFT. Bien que l'indice de polydispersibilité du polymère poly(méth)acrylique obtenu soit supérieur à celui que l'on peut obtenir par le biais d'un procédé de polymérisation radicalaire de type RAFT, une telle solution aqueuse de polymères obtenue selon le procédé de la présente invention comporte un degré de pureté plus grand qu'une solution obtenue par un procédé de polymérisation radicalaire de type RAFT. Ce degré de pureté plus grand n'aurait pas pu être obtenu par la mise en oeuvre d'un procédé classique ou au moyen de techniques de purification, de sorte que la solution aqueuse de polymères selon la présente invention doit être reconnue comme nouvelle vis-à-vis des solutions aqueuses de polymères de l'art antérieur.

Ainsi, le procédé de l'invention permet de réduire la contamination du polymère obtenu, ainsi que la production de sous-produits polluants type CS₂ ou H₂S, du fait que le pourcentage massique entre le composé de formule (I) et les monomères à polymériser est réduit à une valeur comprise entre 0,1 et 2,5 %.

Le procédé de la présente invention permet en outre de résoudre l'un des problèmes techniques majeurs de la présente invention, à savoir proposer un procédé de préparation d'un polymère de masse molaire inférieure à 8 000 g/mol, par exemple inférieure à 6 000 g/mol.

Il est à noter en outre que le procédé de l'invention est un procédé qui ne met pas en oeuvre des solvant tels que des alcools secondaires comme l'isopropanol ou tout autre solvant susceptible de générer des composés organiques volatils (COV).

Le procédé de la présente invention présente, en outre, l'avantage de permettre un taux de conversion élevé dans un temps de réaction raisonnable pour l'industrie. Selon un mode de réalisation du procédé selon l'invention, le temps de réaction de l'étape c) est inférieur à 4 heures.

L'étape c) du procédé de la présente invention met en oeuvre au moins un composé de formule (I) : 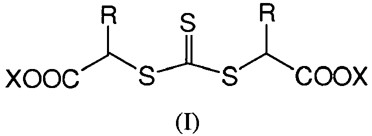 formule (I) selon laquelle :
- X représente Na, K ou H, et
- R représente une chaîne alkyle comportant de 1 à 5 atomes de carbone.

Par « chaîne alkyle comportant de 1 à 5 atomes de carbone », on entend une chaîne méthyle, éthyle, propyle, isopropyle, butyle, tert-butyle, isobutyle ou pentyle.

Selon la présente invention, le pourcentage massique (poids/poids) entre ledit agent de transfert de chaîne et ledit(lesdits) monomère(s) (méth)acrylique(s) est compris entre 0,1 et 2,5 %.

Selon un mode réalisation de la présente invention, le pourcentage massique (poids/poids) entre ledit composé de formule (I) et ledit(lesdits) monomère(s) (méth)acrylique(s) est compris entre 0,15 et 2,1 %.

Selon un autre mode réalisation de la présente invention, le pourcentage massique (poids/poids) entre ledit composé de formule (I) et ledit(lesdits) monomère(s) (méth)acrylique(s) est compris entre 0,15 et 1,5 %.

Selon un mode réalisation de la présente invention, ledit composé de formule (I) est le composé (IV), c'est-à-dire le composé (I) dans lequel X représente Na et R représente CH₃, et le pourcentage massique (poids/poids) entre ledit composé de formule (I) et ledit(lesdits) monomère(s) (méth)acrylique(s) est compris entre 0,1 et 1,75 %.

Selon un autre mode réalisation de la présente invention, ledit composé de formule (I) est le composé (IV), c'est-à-dire le composé (I) dans lequel X représente Na et R représente CH₃, et le pourcentage massique (poids/poids) entre ledit composé de formule (I) et ledit(lesdits) monomère(s) (méth)acrylique(s) est compris entre 0,15 et 1,5 %.

Selon un autre mode réalisation de la présente invention encore, ledit composé de formule (I) est le composé (IV), c'est-à-dire le composé (I) dans lequel X représente Na et R représente CH₃, et le pourcentage massique (poids/poids) entre ledit composé de formule (I) et ledit(lesdits) monomère(s) (méth)acrylique(s) est compris entre 0,15 et 0,5 %.

L'introduction des constituants dans le réacteur de synthèse se fait « de manière continue » c'est-à-dire à vitesse constante ou variable, mais sans arrêt de l'introduction. Egalement, l'introduction des constituants dans le réacteur de synthèse se fait « de manière simultanée », c'est-à-dire que les différents constituants sont introduits concomitamment.

Selon un mode de réalisation du procédé de la présente invention, l'introduction des constituants dans le réacteur de synthèse se fait « de manière proportionnelle » , c'est-à-dire que la proportion de chaque constituant du mélange introduite dans le réacteur de synthèse reste constante au cours du temps de réaction, vis-à-vis des autres constituants du mélange.

Par « le ou les monomère(s) (méth)acrylique(s) à polymériser », on entend que le procédé de l'invention vise à fabriquer soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique). Dans ce dernier cas, selon un aspect de l'invention, le ratio molaire entre acide acrylique et acide méthacrylique peut varier entre 1:100 et 100:1, par exemple entre 1:1 et 100:1, ou entre 1:1 et 50:1.

Par « un système initiateur de polymérisation » ou « système amorçeur de polymérisation », on entend un système capable d'initier la polymérisation des monomères. Il s'agit classiquement d'un composé chimique ayant la capacité de générer des radicaux libre.

Selon un aspect de la présente invention, le système initiateur de polymérisation est choisi dans le groupe consistant en l'eau oxygénée, les persulfates de sodium, les persulfates de potassium, les persulfates d'ammonium, les hydroperoxydes et un mélange d'au moins deux de ces composés.

Selon un autre aspect de la présente invention, le système initiateur de polymérisation est l'eau oxygénée (peroxyde d'hydrogène, H₂O₂).

Selon un aspect de la présente invention, on introduit dans le réacteur de synthèse à l'étape a) du procédé un catalyseur à base de sels métalliques hydrosolubles choisis dans le groupe consistant en le sulfate de cuivre, le sulfate de fer et un mélange de ces composés.

Selon un autre aspect encore de la présente invention, le pourcentage massique (poids/poids) entre ledit catalyseur à base de sels métalliques hydrosolubles et ledit(lesdits) monomère(s) (méth)acrylique(s) est compris entre 0,01 et 3 %, par exemple entre 0,5 et 2,5%.

Selon un autre aspect de la présente invention, ledit au moins un composé de formule (I) est le dipropyl trithiocarbonate (DPTTC, CAS No. 6332-91-8) ou ses sels, par exemple son sel disodique (trithiocarbonate de dipropionate de sodium, CAS No. 86470-33-2), tel que représenté par la formule (IV) ci-dessous :

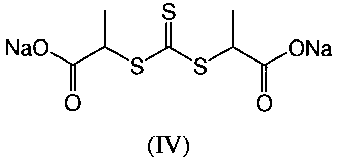

Les polymères sont généralement caractérisés par deux indices/grandeur/valeur :
- l'indice de polymolécularité IP (également appelé de manière équivalent polydispersité PD) ; et
- la masse moléculaire en poids.

L'indice de polymolécularité correspond à la distribution des masses molaires des différentes macromolécules au sein du polymère. Si toutes les macromolécules présentent une même longueur (et donc une même masse moléculaire), cet indice est proche de 1. Si par contre, les macromolécules présentent des longueurs différentes (donc des masses moléculaires différentes), l'indice IP est supérieur à 1. Pour que le polymère constitue un agent dispersant efficace ou d'aide au broyage de matières minérales efficace, on tente généralement de rapprocher le plus possible la valeur de l'IP de 1. Cette efficacité se mesure par exemple à la quantité de matière minérale susceptible d'être dispersée ou broyée dans l'eau, sans pour autant que la viscosité de la suspension fabriquée rende cette dernière impossible à manipuler, à transporter ou à pomper.

Selon la présente invention, le polymère en solution obtenu selon le procédé décrit présente une masse moléculaire inférieure à 8 000 g/mol et un indice de polydispersibilité IP compris entre 2 et 3.

Une analyse RMN associée à de la spectroscopie de diffusion permettent de mettre en évidence l'éventuelle présence de motifs issus de la formule (I) en bout de chaine de polymères selon l'invention. La méthode RMN et la spectroscopie de diffusions sont connues de l'homme du métier.

Les spectres RMN (1D et 2D) peuvent par exemple être réalisés sur un spectromètre Bruker AV 500 équipé d'une sonde TXI (1H/13C/31P) 5 mm. Les échantillons sont mis en solution dans l'eau deutérée et examinés en RMN ¹H avec présaturation du signal de l'eau et en RMN ¹³C : expériences 1D et 2D (corrélations ¹H/¹³C à simple et longue distance).

Selon un aspect de la présente invention, les conditions réactionnelles sont telles que le taux de conversion des monomères à polymériser est supérieur à 99 %.

La quantité de monomères résiduels (acide acrylique ou acide méthacrylique) peut être évaluée par chromatographie liquide à haute pression (CHLP). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide (méth)acrylique résiduel.

Cette méthode est notamment décrite dans le manuel « Chimie Organique Expérimentale », par M. Chavanne, A. Julien, G. J. Beaudoin, E. Flamand, deuxième Edition, Editions Modulo, chapitre 18, pages 271-325.

Selon un autre aspect de la présente invention, les conditions réactionnelles sont telles que le taux de conversion des monomères à polymériser est supérieur à 99,5 %. Dans ce cas, la quantité de monomères résiduels est inférieure à 0,5 % ou inférieure à 5 000 ppm.

Selon un autre aspect de la présente invention, les conditions réactionnelles sont telles que le taux de conversion des monomères à polymériser est supérieur à 99,7 %. Dans ce cas, la quantité de monomères résiduels est inférieure à 0,3 % ou inférieure à 3 000 ppm.

Selon un aspect de la présente invention, selon l'étape b) du procédé, on chauffe le réacteur à une température d'au moins 80°C, par exemple à 95°C.

Selon un autre aspect de l'invention, le procédé ne comporte aucune étape d'élimination des sous-produits de réaction après l'étape c) de polymérisation.

La présente invention concerne également une solution aqueuse de polymères de l'acide (méth)acrylique, caractérisée en ce qu'elle est obtenue par le procédé selon l'invention, lesdits polymères présentant une masse moléculaire inférieure à 8 000 g/mol et un indice de polydispersibilité IP compris entre 2 et 3, le pourcentage molaire (mol/mol) entre les polymères soufrés de l'acide (méth)acrylique et les polymères de l'acide (méth)acrylique totaux étant inférieur à 0,1 %, tel que mesuré par RMN.

Selon un aspect de la présente invention, cette solution de polymères contient une quantité de monomère(s) (méth)acrylique(s) non polymérisés inférieure à 2 % en poids, tel que déterminée par chromatographie liquide à haute performance (HPLC).

Selon un mode de réalisation de l'invention, cette solution de polymères contient une quantité de monomère(s) (méth)acrylique(s) non polymérisés inférieure à 0,3 % en poids.

Selon un autre mode de réalisation de l'invention, cette solution de polymères contient une quantité de monomère(s) (méth)acrylique(s) non polymérisés inférieure à 0,1 % en poids.

Selon un aspect de l'invention, cette solution est caractérisée en ce qu'elle contient une quantité de sous-produits CS₂ inférieure à 0,1 % en poids, tel que déterminée par chromatographie gazeuse et spectroscopie de masse.

Selon un mode de réalisation de l'invention, cette solution de polymères contient une quantité de sous-produits CS₂ inférieure à 0,05 % en poids, c'est-à-dire inférieure à 500 ppm.

Selon un autre mode de réalisation de l'invention, cette solution de polymères contient une quantité de sous-produits CS₂ inférieure à 0,01 % en poids, c'est-à-dire inférieure à 100 ppm.

Selon un autre mode de réalisation encore, cette solution de polymères contient une quantité de sous-produits CS₂ inférieure à 50 ppm.

Selon un aspect de l'invention, cette solution est caractérisée en ce qu'elle contient une quantité de sous-produits H₂S inférieure à 0,01 % en poids, tel que déterminée par chromatographie gazeuse et spectroscopie de masse.

La présente invention concerne enfin les différentes utilisations de la solution aqueuse de polymères selon l'invention.

L'invention concerne notamment l'utilisation d'une solution aqueuse de polymères de l'acide (méth)acrylique selon l'invention comme agent d'aide au broyage et/ou d'aide au cobroyage de matières minérales.

Par « matière minérale », on entend une matière minérale choisie dans le groupe consistant en le carbonate de calcium naturel ou synthétique, les dolomies, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

L'invention concerne également l'utilisation d'une solution aqueuse de polymères de l'acide (méth)acrylique selon l'invention pour disperser des particules de matière minérale en solution.

Selon un mode de réalisation, la solution aqueuse de polymères de l'acide (méth)acrylique telle qu'obtenue par le procédé selon l'invention est utilisée pour disperser des particules de carbonate de calcium en solution.

L'invention concerne aussi l'utilisation d'une solution aqueuse de polymères de l'acide (méth)acrylique selon l'invention pour préparer une suspension de matière minérale, par exemple une suspension de carbonate de calcium.

### EXEMPLES

Dans chacun des exemples suivants, la masse moléculaire des polymères selon l'invention est déterminée par chromatographie d'exclusion stérique (CES) ou en anglais « Gel Permeation Chromatography » (GPC).

Une telle technique met en oeuvre un appareil de chromatographie liquide de marque WATERSTM doté d'un détecteur. Ce détecteur est un détecteur de concentration réfractométrique de marque WATERSTM.

Cet appareillage de chromatographie liquide est doté d'une colonne d'exclusion stérique convenablement choisie par l'homme du métier afin de séparer les différents poids moléculaires des polymères étudiés. La phase liquide d'élution est une phase aqueuse ajustée à pH 9,00 par de la soude 1N contenant 0,05M de NaHCO3, 0,1M de NaNO3, 0,02M de triétanolamine et 0,03% de NaN3.

De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05M de NaHCO3, 0,1M de NaNO3, 0,02M de triétanolamine et 0,03 % de NaN3).

L'appareil de chromatographie liquide contient une pompe isocratique (WATERSTM 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERSTM de 6 cm de long et 40 mm de diamètre intérieur, et une colonne linéaire de type ULTRAHYDROGEL WATERSTM de 30 cm de long et 7,8 mm de diamètre intérieur. Le système de détection quant à lui se compose d'un détecteur réfractométrique de type RI WATERSTM 410. Le four est porté à la température de 60°C, et le réfractomètre est porté à la température de 45°C.

L'appareil de chromatographie est étalonné par des étalons de polyacrylate de sodium en poudre de différentes masses moléculaires certifiées pour le fournisseur: POLYMER STANDARD SERVICE ou AMERICAN POLYMER STANDARDS CORPORATION.

L'indice de polydispersibilité IP du polymère est le rapport de la masse moléculaire moyenne en masse Mw sur la masse moléculaire en nombre Mn.

La quantité de monomères résiduels est mesurée selon des techniques classiques, connues de l'homme du métier, par exemple par chromatographie liquide à haute pression (CHLP).

### Exemple 1

Cet exemple a pour objet d'illustrer la préparation de polymères d'acide (méth)acrylique selon l'invention, par l'utilisation d'un sel de dipropionate trithiocarbonate (DPTTC) en pourcentage massique (poids/poids) entre ledit sel de DPTTC et ledit(lesdits) monomère(s) (méth)acrylique(s) compris entre 0,1 et 2,5 % (invention) ou en dehors de cette gamme (hors invention).

### Essai 1 - Art antérieur

Cet essai illustre un procédé de préparation d'un polymère au moyen d'une polymérisation radicalaire contrôlée de type RAFT.

On charge dans le réacteur de synthèse en verre muni d'une agitation mécanique et d'un chauffage de type bain d'huile 328 g d'eau, 94 g d'agent de transfert de chaîne DPTTC 29 % (soit 27 g de DPTTC 100 % ou 0,092 mole).

On chauffe jusqu'à atteindre une température de 95°C.

On coule en 2 heures de temps 328 g d'acide acrylique 100 % (soit 4,558 moles) et parallèlement à l'acide acrylique, la source de radicaux libres, en l'espèce 4 g de persulfate de sodium Na₂S₂O₈ (soit 0,017 mole) dissous dans 76 g d'eau et 1,15 g de metabisulfate de sodium Na₂S₂O₅ (soit 0,006 mole) dissous dans 76 g d'eau.

On maintient ensuite la température pendant 2h, puis on traite en injectant à 3,2 g d'eau oxygénée 130V dilué avec 46 g d'eau.

On neutralise ensuite sous agitation avec 381 g de soude 50 % diluée avec 48 g d'eau. Enfin le mélange est traité toujours à 95°C avec une solution constituée de 7,83 g de persulfate de sodium dissous dans 15 g d'eau et une solution de 5,59 g d'eau oxygénée et on cuit à nouveau 1 heure à 95°C puis on laisse refroidir à température ambiante.

### Essai 2 - Art antérieur

Selon cet essai, on reproduit les conditions de l'essai 1 en diminuant d'un facteur 10 la quantité d'agent de transfert de chaîne DPTTC utilisé.

On charge dans le réacteur de synthèse en verre muni d'une agitation mécanique et d'un chauffage de type bain d'huile 328 g d'eau, 19 g d'agent de transfert de chaîne DPTTC 14 % (soit 2,7 g de DPTTC 100 % ou 0,0092 mole),
On chauffe jusqu'à atteindre une température de 95°C.

On coule en 2 heures de temps 328 g d'acide acrylique 100 % (soit 4,558 moles) et parallèlement à l'acide acrylique, la source de radicaux libres, en l'espèce 4 g de persulfate de sodium Na₂S₂O₈ (soit 0,017 mole) dissous dans 76 g d'eau et 1,15 g de metabisulfate de sodium Na₂S₂O₅ (soit 0,006 mole) dissous dans 76 g d'eau

On maintient ensuite la température pendant 2h, puis on traite en injectant à 3,2 g d'eau oxygénée 130V dilué avec 46 g d'eau.

On neutralise ensuite sous agitation avec 381 g de soude 50 % diluée avec 48 g d'eau. Enfin le mélange est traité toujours à 95°C avec une solution constituée de 7,83 g de persulfate de sodium dissous dans 15 g d'eau et une solution de 5,59 g d'eau oxygénée et on cuit à nouveau 1 heure à 95°C puis on laisse refroidir à température ambiante.

### Essai 3 - Art antérieur

Cet essai correspond à l'essai 2 de l'exemple 2 dans le document WO 2005/095466.

On charge dans le réacteur de synthèse muni d'une agitation mécanique et d'un chauffage de type bain d'huile 150 g d'eau, 20,31 g d'agent de transfert de chaîne DPTTC 14,4 % (soit 2,92 g de DPTTC 100 %), ainsi que 50 g d'acide acrylique 100 %. On ajoute ensuite la source de radicaux libres, en l'espèce 0,4 g de V501. On chauffe jusqu'à atteindre une température de 95°C. On maintient ensuite la température pendant 2h, puis on laisse refroidir à température ambiante.

On neutralise alors avec 55 g de soude 50 %

### Essai 4 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 1,91 g de sel disodique de DPTTC à 14 % (soit 0,27 g de DPTTC 100 %) diluée dans 31,1 g d'eau,
- 35,3 g d'eau oxygénée 130V diluée dans 9,4 g d'eau et
- 279,9 g d'acide acrylique dilué avec 31 g d'eau.

On cuit 1h30 à 95°C.

On neutralise avec 250 g de soude 50 %.

### Essai 5 - invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 34,31 g de sel disodique de DPTTC à 14 % (soit 4,80 g de DPTTC 100 %) diluée dans 34,31 g d'eau,
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 6 - invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 3,35 g de sel disodique de DPTTC à 20,9 % (soit 0,70 g de DPTTC 100 %) diluée dans 31 g d'eau,
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 7- Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 6,695 g de sel disodique de DPTTC à 20,9 % (soit 1,4 g de DPTTC à 100 %) diluée avec 31 g d'eau,
- 35,3 g d'eau oxygénée 130V diluée dans 9,4 g d'eau et
- 279,9 g d'acide acrylique dilué avec 31 g d'eau.

On cuit 1h30 à 95°C.

On neutralise avec 250 g de soude 50 %.

### Essai 8 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 10,04 g de sel disodique de DPTTC à 20,9 % (soit 2,1 g de DPTTC à 100 %) diluée avec 31 g d'eau,
- 35,3 g d'eau oxygénée 130V diluée dans 9,4 g d'eau et
- 279,9 g d'acide acrylique dilué avec 31 g d'eau.

On cuit 1h30 à 95°C.

On neutralise avec 250 g de soude 50 %.

### Essai 9 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 13,39 g de sel disodique de DPTTC à 20,9 % (soit 2,8 g de DPTTC à 100 %) diluée avec 31 g d'eau
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 10 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 16,7 g de sel disodique de DPTTC à 20,9 % (soit environ 3,5 g de DPTTC à 100 %) diluée avec 31 g d'eau,
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 11 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 20,1 g de sel disodique de DPTTC à 20,9 % (soit 4,2 g de DPTTC à 100 %) diluée avec 31 g d'eau
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 12 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 23,43g de sel disodique de DPTTC à 20,9 % (soit 4,9 g de DPTTC à 100 %) diluée avec 31 g d'eau,
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 13 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 26,78 g de sel disodique de DPTTC à 20,9 % (soit 5,6 g de DPTTC à 100 %) diluée avec 31 g d'eau,
- 35,3 g d'eau oxygénée 130V diluée avec 9,4 g d'eau et
- 279,9 g d'acide acrylique dilué avec 31 g d'eau.

On cuit 1h30 à 95°C.

On neutralise avec 250 g de soude 50 %.

### Essai 14 - Invention

On charge dans un réacteur de synthèse muni d'une agitation mécanique et d'un chauffage de type bain d'huile 213,4 g d'eau, 0,27 g de sulfate de fer heptahydraté et 0,32 g de sulfate de cuivre pentahydraté.

On chauffe le milieu à 95°C puis on ajoute de manière simultanée et continue, en 2 heures de temps :
- une solution mère de 33,476 g de sel disodique de DPTTC à 20,9 % (soit 7 g de DPTTC à 100 %) diluée dans 31 g d'eau,
- 35,3 g d'eau oxygénée 130V diluée dans 9,4 g d'eau et
- 279,9 g d'acide acrylique dilué dans 31 g d'eau.

On cuit 1h30 à 95°C.

On neutralise avec 250 g de soude 50 %.

| Essai n° | INVention Art ANTérieur | % massique DPTTC / monomères | Mw (g/mol) | IP | pH | AA résiduels (ppm) |
|---|---|---|---|---|---|---|
| 1 | AANT | 8,23 | 5065 | 1,5 | 9 | 500 |
| 2 | AANT | 0,82 | 43400 | 3,5 | 8,5 | 113 |
| 3 | AANT | 5,8 | 4947 | 1,55 | 9 | |
| 4 | INV | 0,10 | 8 925 | 3 | 8 | 86 |
| 5 | INV | 1,71 | 3 800 | 2,2 | 8,4 | 7650 |
| 6 | INV | 0,25 | 6595 | 2,7 | 7,5 | 340 |
| 7 | INV | 0,50 | 6475 | 2,9 | 8,2 | 360 |
| 8 | INV | 0,75 | 5040 | 2,5 | 7,9 | 1200 |
| 9 | INV | 1,0 | 4615 | 2,3 | 7,9 | 2660 |
| 10 | INV | 1,25 | 4540 | 2,4 | 8 | 4196 |
| 11 | INV | 1,5 | 4175 | 2,3 | 8 | 3084 |
| 12 | INV | 1,75 | 3930 | 2,2 | 8,1 | 5245 |
| 13 | INV | 2,0 | 3 965 | 2,2 | 7,9 | 5 125 |
| 14 | INV | 2,5 | 3225 | 2,2 | 8 | 8233 |

### Exemple 2

Cet exemple a pour objet d'illustrer les teneurs en isopropanol, en sulfure de carbone et en sulfure d'hydrogène de différents échantillons mettant en oeuvre des solutions de polymères de l'art antérieur ou des solutions de polymères selon la présente invention.

Les analyses des différents échantillons sont réalisées à l'aide d'une chromatographie gazeuse Agilent G1530 couplée à un spectromètre de masse Agilent G2577A comme détecteur. L'injection est réalisée grâce à un espace de tête Agilent G1888. On utilise une colonne Agilent HP5 30 m x 0,25 mm x 1 µm (phase 5 % phényl et 95 % méthylsiloxane) qui permet l'élution des analyses. L'analyse est réalisée à partir de 2 grammes en l'état des échantillons. La quantification est réalisée par la méthode des ajouts dosés.

### Essai 1- solution de polymères

On réalise 3 synthèses :
- un dispersant polyacrylique préparé au moyen d'un procédé de polymérisation dans l'isopropanol ; Mw = 5 500 ; IP = 2,4
- un dispersant polyacrylique préparé au moyen d'un procédé de polymérisation radicalaire contrôlée de type RAFT, selon l'essai 1 de l'exemple 1 ci-dessus (sans post-traitement), avec le dipropionate trithiocarbonate (DPTTC) comme agent de transfert de chaîne dans un pourcentage massique (poids/poids) entre ledit composé DPTTC et les monomères acide acrylique égale à 8,23 % ; Mw = 5 065 ; IP = 1,5
- une solution de polymère de l'acide polyacrylique préparée au moyen d'un procédé selon la présente invention, selon l'essai 8 de l'exemple 1 ci-dessus, avec le dipropionate trithiocarbonate (DPTTC) comme composé de formule (I) dans un pourcentage massique (poids/poids) entre ledit composé DPTTC et les monomères acide acrylique égale à 0,75 % ; Mw = 5040 ; IP = 2,5.

On obtient respectivement les échantillons 1, 2 et 3.

Les résultats d'analyses sur ces échantillons sont consignés dans le tableau 1 ci-dessous.

**Tableau 1**

| Echantillons | INVention Art ANTérieur | Teneur en isopropanol (ppm) | Teneur en H₂S (ppm) | Teneur en CS₂ (ppm) |
|---|---|---|---|---|
| 1 | AANT - iso | 2000 | *nd* | *nd* |
| 2 | AANT - RAFT | *nd* | 200 | *1000* |
| 3 | INV | *nd* | *nd* | *nd* |

L'analyse de l'échantillon 1, c'est-à-dire un dispersant polyacrylique préparé au moyen d'un procédé de l'art antérieur à l'isopropanol, indique une forte teneur en isopropanol résiduel (2 000 ppm).

L'analyse de l'échantillon 2, c'est-à-dire un dispersant polyacrylique obtenu au moyen d'un procédé RAFT, indique des teneurs importantes en sous-produits soufrés H₂S et CS₂, ce qui constitue un inconvénient majeur du fait de leur toxicité.

L'analyse de l'échantillon 3, à savoir une solution de polymère de l'acide polyacrylique préparée au moyen d'un procédé selon la présente invention, montre que les teneurs en isopropanol, H₂S et CS₂ sont non détectables. Ainsi, les risques sur l'être humain et sur l'environnement lors de la synthèse du polymère, mais également lors de l'utilisation de la solution polymérique notamment pour le broyage des matières minérales sont réduits de manière considérable.

### Essai 2 - suspension de carbonate de calcium

On prépare trois suspensions de carbonate de calcium, à partir de calcite grossière (Omya) à 76 % de concentration et contenant chacune 1,1 wt. % (sec/sec) du dispersant suivant :
On réalise 3 synthèses :
   - un dispersant polyacrylique préparé au moyen d'un procédé de polymérisation dans l'isopropanol ; Mw = 5 500 ; IP = 2,4
   - un dispersant polyacrylique préparé au moyen d'un procédé de polymérisation radicalaire contrôlée de type RAFT, selon l'essai 1 de l'exemple 1 ci-dessus (sans post-traitement), avec le dipropionate trithiocarbonate (DPTTC) comme agent de transfert de chaîne dans un pourcentage massique (poids/poids) entre ledit composé DPTTC et les monomères acide acrylique égale à 8,23 % ; Mw = 5 065 ; IP = 1,5
   - un dispersant qui est une solution de polymère de l'acide polyacrylique préparée au moyen d'un procédé selon la présente invention, selon l'essai 8 de l'exemple 1 ci-dessus, avec le dipropionate trithiocarbonate (DPTTC) comme composé de formule (I) dans un pourcentage massique (poids/poids) entre ledit composé DPTTC et les monomères acide acrylique égale à 0,75 % ; Mw = 5040 ; IP = 2,5.

On obtient respectivement les échantillons 4, 5 et 6.

### Essai 3 - utilisation des solutions de polymères pour le broyage du carbonate de calcium

Cet essai illustre la mise en oeuvre de différentes solutions de polymères comme agent d'aide au broyage de matière minérale et plus particulièrement de carbonate de calcium. On prépare trois suspensions de carbonate de calcium, à partir de calcite grossière (Omya) à 76 % de concentration et contenant chacune 0,6 wt. % (sec/sec) de l'agent suivant :
On réalise 3 synthèses :
   - un agent de type polymère de l'acide polyacrylique préparé au moyen d'un procédé de polymérisation dans l'isopropanol ; Mw = 5 500 ; IP = 2,4
   - un agent de type polymère de l'acide polyacrylique préparé au moyen d'un procédé de polymérisation radicalaire contrôlée de type RAFT, selon l'essai 1 de l'exemple 1 ci-dessus (sans post-traitement), avec le dipropionate trithiocarbonate (DPTTC) comme agent de transfert de chaîne dans un pourcentage massique (poids/poids) entre ledit composé DPTTC et les monomères acide acrylique égale à 8,23 % ; Mw = 5 065 ; IP = 1,5
   - une solution de polymère de l'acide polyacrylique préparée au moyen d'un procédé selon la présente invention, selon l'essai 8 de l'exemple 1 ci-dessus, avec le dipropionate trithiocarbonate (DPTTC) comme composé de formule (I) dans un pourcentage massique (poids/poids) entre ledit composé DPTTC et les monomères acide acrylique égale à 0,75 % ; Mw = 5040 ; IP = 2,5.

La dose d'agent d'aide au broyage est portée à 1.1 wt. % par ajouts successifs pendant le temps de broyage, au moyen d'un broyeur de type Dyno MILL type KDL Pilote 1.4L contenant 2 850 g de billes en VERAC (Ø 0,6 - 1,0 mm).

Le broyage est maintenu jusqu'à ce que l'on obtienne une suspension affinée à 76 % de concentration et dont environ 80 % des particules ont un diamètre sphérique équivalent inférieur à 1 µm.

La température de la suspension est maintenue en dessous de 55°C durant toute l'expérimentation. Le bécher contenant le slurry est recouvert par un film d'aluminium afin de limiter le dégagement des composés volatiles à l'atmosphère.

Les prélèvements sont stockés dans des flacons remplis de manière à ne laisser aucun volume mort pouvant contenir de l'air.

On obtient respectivement les échantillons 7, 8 et 9.

### Résultats

Les résultats d'analyse des échantillons 4 à 9 sont consignés dans le tableau 2 ci-dessous.

**Tableau 2**

| Echantillons | INVention Art ANTérieur | Broyage | Teneur en isopropanol (ppm) | Teneur en CS₂ (ppm) |
|---|---|---|---|---|
| 4 | AANT - iso | avant | 100 | *nd* |
| 5 | AANT - iso | après | 75 | *nd* |
| 6 | AANT - RAFT | avant | *nd* | 20 |
| 7 | AANT - RAFT | après | *nd* | 8 |
| 8 | INV | avant | *nd* | *nd* |
| 9 | INV | après | *nd* | *nd* |

L'analyse des échantillons 8 et 9, à savoir une suspension de carbonate de calcium contenant une solution de polymère de l'acide polyacrylique préparée au moyen d'un procédé selon la présente invention, montre que les teneurs en isopropanol et CS₂ sont non détectables avant et après broyage. Ainsi, les risques sur l'être humain et sur l'environnement lors de l'utilisation de la solution polymérique pour le broyage des matières minérales sont réduits de manière considérable. On constate par contre une diminution de la teneur en isopropanol lors du broyage (différence entre échantillons 4 et 5), ce qui indique un dégagement de VOC. On constate également une diminution de la teneur en CS₂ lors du broyage (différence entre échantillons 6 et 7), ce qui montre un dégagement de CS₂ lors du broyage du carbonate de calcium.

## Revendications

1. Procédé de préparation sans solvant d'un polymère de l'acide (méth)acrylique en solution, ledit polymère présentant une masse moléculaire inférieure à 8 000 g/mol et un indice de polydispersibilité IP compris entre 2 et 3, comprenant les étapes suivantes :
a) on introduit de l'eau dans un réacteur de synthèse, et éventuellement un catalyseur à base de sels métalliques hydrosolubles,
b) on chauffe le réacteur à une température d'au moins 60°C,
c) on introduit dans le réacteur, de manière continue et simultanée, les composés suivants :
b1) le ou les monomère(s) (méth)acrylique(s) à polymériser
b2) au moins un composé de formule (I) : 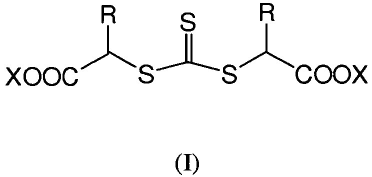 selon laquelle :
- X représente Na, K ou H, et
- R représente une chaîne alkyle comportant de 1 à 5 atomes de carbone
b3) un système initiateur de polymérisation,
le pourcentage massique (poids/poids) entre ledit composé de formule (I) et ledit(lesdits) monomère(s) (méth)acrylique(s) étant compris entre 0,1 et 2,5 %.

2. Procédé selon la revendication 1, selon lequel le pourcentage massique (poids/poids) entre ledit composé de formule (I) et ledit(lesdits) monomère(s) (méth)acrylique(s) étant compris entre 0,15 et 1,5 %.

3. Procédé selon la revendication 1 ou 2, selon lequel le composé de formule (I) est tel que R est CH₃ et X est Na et le pourcentage massique (poids/poids) entre ledit composé de formule (I) et ledit(lesdits) monomère(s) (méth)acrylique(s) est compris entre 0,15 et 0,5 %.

4. Procédé selon l'une quelconque des revendications précédentes, selon lequel le système initiateur de polymérisation est l'eau oxygénée.

5. Procédé selon l'une quelconque des revendications précédentes, selon lequel on introduit dans le réacteur de synthèse à l'étape a) du procédé un catalyseur à base de sels métalliques hydrosolubles choisis dans le groupe consistant en le sulfate de cuivre, le sulfate de fer et un mélange de ces composés.

6. Procédé selon la revendication 5, selon lequel le pourcentage massique (poids/poids) entre ledit catalyseur à base de sels métalliques hydrosolubles et ledit(lesdits) monomère(s) (méth)acrylique(s) est compris entre 0,01 et 3 %.

7. Procédé selon l'une quelconque des revendications précédentes, selon lequel ledit procédé ne comporte aucune étape d'élimination des sous-produits de réaction après l'étape c) de polymérisation.

8. Solution aqueuse de polymères de l'acide (méth)acrylique, **caractérisée en ce qu'**elle est obtenue par le procédé selon l'une quelconque des revendications 1 à 7, lesdits polymères présentant une masse moléculaire inférieure à 8 000 g/mol et un indice de polydispersibilité IP compris entre 2 et 3, le pourcentage molaire (mol/mol) entre les polymères soufrés de l'acide (méth)acrylique et les polymères de l'acide (méth)acrylique totaux étant inférieur à 0,1 %, tel que mesuré par RMN.

9. Solution selon la revendication 8, **caractérisée en ce qu'**elle contient une quantité de monomère(s) (méth)acrylique(s) non polymérisés inférieure à 2 % en poids, tel que déterminée par chromatographie liquide à haute performance (HPLC).

10. Solution selon la revendication 8 ou 9, **caractérisée en ce qu'**elle contient une quantité de sous produit CS₂ inférieure à 0,1 %, de préférence inférieure à 0,05 %, de manière encore plus préférée inférieure à 0,01 %, tel que déterminée par chromatographie gazeuse et spectroscopie de masse.

11. Utilisation d'une solution aqueuse de polymères de l'acide (méth)acrylique selon l'une quelconque de revendications 8 à 10, comme agent d'aide au broyage et/ou d'aide au cobroyage de matières minérales.

12. Utilisation d'une solution aqueuse de polymères de l'acide (méth)acrylique selon l'une quelconque de revendications 8 à 10, pour disperser des particules de matière minérale en solution.

13. Utilisation d'une solution aqueuse de polymères de l'acide (méth)acrylique selon l'une quelconque de revendications 8 à 10, pour préparer une suspension de matière minérale.

## Patentansprüche

1. Verfahren zur lösungsmittelfreien Herstellung eines (Meth)acrylsäurepolymers in Lösung, wobei das Polymer eine Molmasse von weniger als 8000 g/mol und einen Polydispersitätsindex PI zwischen 2 und 3 aufweist, bei dem man:
a) in einen Synthesereaktor Wasser und gegebenenfalls einen Katalysator auf Basis von wasserlöslichen Metallsalzen einträgt,
b) den Reaktor auf eine Temperatur von mindestens 60°C erhitzt,
c) in den Reaktor kontinuierlich und gleichzeitig die folgenden Verbindungen einträgt:
b1) das zu polymerisierende (Meth)acrylmonomer bzw. die zu polymerisierenden (Meth)acrylmonomeren,
b2) mindestens eine Verbindung der Formel (I): 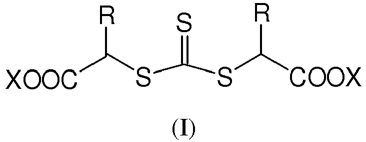 gemäß der:
- X für Na, K oder H steht und
- R für eine Alkylkette mit 1 bis 5 Kohlenstoffatomen steht,
b3) ein Polymerisationsinitiatorsystem,
wobei der Massenprozentanteil (Gewicht/Gewicht) zwischen der Verbindung der Formel (I) und dem (Meth)acrylmonomer bzw. den (Meth)acrylmonomeren zwischen 0,1 und 2,5% liegt.

2. Verfahren nach Anspruch 1, gemäß dem der Massenprozentanteil (Gewicht/Gewicht) zwischen der Verbindung der Formel (I) und dem (Meth)acrylmonomer bzw. den (Meth)acrylmonomeren zwischen 0,15 und 1,5% liegt.

3. Verfahren nach Anspruch 1 oder 2, gemäß dem die Verbindung der Formel (I) so beschaffen ist, dass R CH₃ ist und X Na ist und der Massenprozentanteil (Gewicht/Gewicht) zwischen der Verbindung der Formel (I) und dem (Meth)acrylmonomer bzw. den (Meth)acrylmonomeren zwischen 0,15 und 0,5% liegt.

4. Verfahren nach einem der vorhergehenden Ansprüche, gemäß dem es sich bei dem Polymerisationsinitiatorsystem um wässrige Wasserstoffperoxid-lösung handelt.

5. Verfahren nach einem der vorhergehenden Ansprüche, gemäß dem man in Schritt a) des Verfahrens in den Synthesereaktor einen Katalysator auf Basis von wasserlöslichen Metallsalzen aus der Gruppe bestehend aus Kupfersulfat, Eisensulfat oder einer Mischung dieser Verbindungen einträgt.

6. Verfahren nach Anspruch 5, gemäß dem der Massenprozentanteil (Gewicht/Gewicht) zwischen dem Katalysator auf Basis von wasserlöslichen Metallsalzen und dem (Meth)acrylmonomer bzw. den (Meth)acrylmonomeren zwischen 0,01 und 3% liegt.

7. Verfahren nach einem der vorhergehenden Ansprüche, gemäß dem das Verfahren keinen Schritt der Entfernung von Reaktionsnebenprodukten nach dem Polymerisationsschritt c) umfasst.

8. Wässrige Lösung von (Meth)acrylsäurepolymeren, **dadurch gekennzeichnet, dass** sie durch das Verfahren gemäß einem der Ansprüche 1 bis 7 erhalten wird, wobei die Polymere eine Molmasse von weniger als 8000 g/mol und einen Polydispersitätsindex PI zwischen 2 und 3 aufweisen, wobei der mittels NMR gemessene Molprozentanteil (mol/mol) zwischen den schwefelhaltigen (Meth)acrylsäurepolymeren und den (Meth)-acrylsäurepolymeren insgesamt kleiner als 0,1% ist.

9. Lösung nach Anspruch 8, **dadurch gekennzeichnet, dass** sie eine mittels Hochleistungs-Flüssigkeitschromatographie (HPLC) bestimmte Menge von nicht polymerisiertem (Meth)acrylsäuremonomer bzw. nicht polymerisierten (Meth)acrylsäuremonomeren von weniger als 2 Gew.-% enthält.

10. Lösung nach Anspruch 8 oder 9, **dadurch gekennzeichnet, dass** sie eine durch Gaschromatographie und Massenspektroskopie bestimmte Menge des Nebenprodukts CS₂ von weniger als 0,1%, vorzugsweise weniger als 0,05% und noch weiter bevorzugt weniger als 0,01 % aufweist.

11. Verwendung einer wässrigen Lösung von (Meth)acrylsäurepolymeren gemäß einem der Ansprüche 8 bis 10 als Mahlhilfsmittel und/oder Co-Mahlhilfsmittel für mineralische Materialien.

12. Verwendung einer wässrigen Lösung von (Meth)acrylsäurepolymeren gemäß einem der Ansprüche 8 bis 10 zum Dispergieren von Teilchen aus mineralischem Material in Lösung.

13. Verwendung einer wässrigen Lösung von (Meth)acrylsäurepolymeren gemäß einem der Ansprüche 8 bis 10 zur Herstellung einer Suspension von mineralischem Material.

## Claims

1. A method for solvent-free preparation of a (meth)acrylic acid polymer in solution, said polymer having a molecular mass less than 8,000 g/mol and a polydispersity IP index comprised between 2 and 3, including the following steps:
a) water, and optionally a water-soluble metal salt-based catalyst, are introduced into a synthesis reactor,
b) the reactor is heated to a temperature of at least 60°C,
c) the following compounds are continuously and simultaneously introduced into the reactor:
b1) the (meth)acrylic monomer(s) to be polymerized
b2) at least one compound of formula (I): 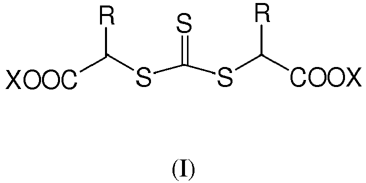 wherein:
- X represents Na, K or H, and
- R represents an alkyl chain having from 1 to 5 carbon atoms
b3) a polymerization initiator system,
the (weight/weight) mass percentage between said compound of formula (I) and said (meth)acrylic monomer(s) being comprised between 0.1 and 2.5%.

2. A method according to claim 1, according to which the (weight/weight) mass percentage between said compound of formula (I) and said (meth)acrylic monomer(s) being comprised between 0.15 and 1.5%.

3. A method according to claim 1 or 2, according to which the compound of formula (I) is such that R is CH₃ and X is Na and the (weight/weight) mass percentage between said compound of formula (I) and said (meth)acrylic monomer(s) is between 0.15 and 0.5%.

4. A method according to any one of the previous claims, according to which the polymerization initiator system is hydrogen peroxide.

5. A method according to any one of the previous claims, according to which a water-soluble metal salt-based catalyst, chosen from among the group consisting of copper sulphate, iron sulphate and a mixture of these compounds, is introduced into the synthesis reactor in step a) of the method.

6. A method according to claim 5, according to which the (weight/weight) mass percentage between said water-soluble metal salt-based catalyst and said (meth)acrylic monomer(s) is between 0.01 and 3%.

7. A method according to any one of the previous claims, according to which said method includes none step of elimination of reaction by-products after step c) of polymerization.

8. An aqueous solution of (meth)acrylic acid polymers, **characterized in that** it is obtained by the method according to any one of claims 1 to 7, said polymers having a molecular mass of less than 8,000 g/mol and a polydispersity IP index comprised between 2 and 3, and the (mol/mol) molar percentage between sulphurous polymers of (meth)acrylic acid and total polymers of (meth)acrylic acid being less than 0.1%, as measured by RMN.

9. A solution according to claim 8, **characterized in that** it contains an amount of unpolymerized (meth)acrylic monomer(s) less than 2% by weight, as determined by high-performance liquid chromatography (HPLC).

10. A solution according to claim 8 or 9, **characterized in that** it contains an amount of CS₂ by-product less than 0.1%, preferably less than 0.05%, even more preferably less than 0.01%, as determined by gas chromatography and mass spectroscopy.

11. Use of an aqueous solution of (meth)acrylic acid polymers according to any of claims 8 to 10, as grinding aid agent and / or co-grinding aid agent of mineral matters.

12. Use of an aqueous solution of (meth)acrylic acid polymers according to any of claims 8 to 10, to disperse mineral matter particles in solution.

13. Use of an aqueous solution of (meth)acrylic acid polymers according to any of claims 8 to 10, to prepare a suspension of mineral matter.
